# EUROPEAN PATENT SPECIFICATION

(11) **EP 0 906 680 B1**
(45) Date of publication and mention of the grant of the patent: **25.05.2005**
(21) Application number: 97924452.2
(22) Date of filing: 23.05.1997
(51) Int. Cl.: H04L 9/32

(54) **IMPROVEMENTS IN, OR RELATING TO, INTERNET COMMUNICATION SYSTEMS**
VERBESSERUNG VON INTERNET-KOMMUNIKATIONSSYSTEMEN
AMELIORATIONS RELATIVES AUX SYSTEMES DE COMMUNICATION INTERNET

(30) Priority: 26.06.1996 SE 9602528
(43) Date of publication of application: 07.04.1999
(73) Proprietor: Telia AB (publ), 123 86 Farsta (SE)
(72) Inventor: LILJEQVIST, Per, S-128 48 Bagarmossen (SE); CARLSSON, Tommy, S-756 55 Uppsala (SE); FUCHS, Robert, S-754 47 Uppsala (SE)
(74) Representative: Akerman, Marten Lennart
(86) International application number: PCT/SE1997/000849
(87) International publication number: WO 1997/050207

(56) References cited:
- US-A- 5 475 757
- IEEE SPECTRUM, August 1989, KAREN FITZGERALD, "The Quest for Intruder-Proof Computer Systems", pp. 22-26.

## Description

The invention relates to an Internet communication system, a secure computer terminal, an internet WWW (World Wide Web)-server for said system, and a method for the secure transmission of information data between an Internet WWW-server and a computer terminal.

The nature, and implementation, of Internet technologies is well known to persons skilled in the art and, whilst the Internet can be attributed with a number of different qualities, security is not one of these attributes. As a consequence of this. use of the public network, provided by the Internet, is excluded for a wide range of applications, for example, business transactions, where security of information is of prime importance.

There is, therefore, a requirement to be able to maintain security of the data traffic as it traverses those sections of the network to which the public has access.

In US-A-5 475 757, a method for encrypting and decrypting messages to be sent over an information network is described. The method is based on use of a card-reader in the vicinity of the sending station for encrypting of the message. This document does however not teach or imply that the message sent should have WWW capabilities.

The Internet is, in essence, a global network of interconnected computer terminals, or networks, and comprises a number of separate interconnected networks which are owned and controlled by a number of organisations, for example, network operators, Internet service providers, businesses and universities. The World Wide Web (WWW), known as the 'Web', provides a relatively simple means of accessing, and navigating through the information data provided by Web sites and, in particular, WWW-servers, i.e. computers. WWW-servers can, in effect, be accessed by computer terminal users having the necessary authority from Web site operators, to obtain information data. on any desired topic, stored by the servers. WWW-servers respond to requests for information data, by sending out 'pages' of text, pictures and other information. The information data, comprising a 'page', are combined and displayed on the screen of a user's computer terminal. Web browsers are used to allow access to information held on the Web site servers. In fact, Web-browser software sends out the requests for 'pages' to Web-servers. The universal language of the Internet is HyperTextMarkup Language (HTML) which is a page description language used on WWW The storage of information data on a Web site server, i.e. as as 'pages', is effected using HTML and Web site templates.

It is an object of the present invention to provide an Internet communication system for effecting secure transmission of information data between an Internet WWW-server and a computer terminal.

It is another object of the present invention to provide a secure computer terminal for use by Internet-clients.

It is another object of the present invention to provide a secure Internet WWW-server for use by Internet-clients.

It is a further object of the present invention to provide a method for the secure transmission of information data between an Internet WWW-server and a computer terminal

The present invention provides an Internet communication system including a computer terminal, for each Internet-client, and a number of Internet WWW-servers adapted to be accessed by an Internet-client, said computer terminals being adapted for connection to the Internet and having a WWW-browser and a data modem for respectively accessing, and interfacing with, the WWW-servers, characterised in that the communication system includes security means, for said computer terminals and Internet-servers, to ensure that transactions between a WWW-server and an Intemet-client are secure, said security means including an Internet-client server for each computer terminal and means for endorsing each transactions with an electronic signature, and in that said Internet-client server has WWW-functionalities and is adapted to link with said data modem and said transaction endorsement means. The security means may be adapted to encrypt and decrypt said transactions.

The transaction endorsement means may include a personalised smart card for each Internet client, in which case, the computer terminals will each include a smart card reader connected to a communication port of a respective computer terminal. The encryption and decryption may be effected by the smart cards.

On the server side of the system, the security means may be arranged behind each of said Internet WWW-servers and adapted to verify said electronic signature. The Internet WWW-server security means are adapted to encrypt and decrypt information. The security means may be arranged behind each of said Internet WWW-servers and use cgi-script and WWW-compatible software.

The system, of the present invention, may include, for each Internet WWW-server, a storage system for storing verified secure transactions, each of said storage systems being connected to a respective Internet WWW-server. The system may also include a router for each Internet WWW-server, said router being adapted to connect a respective Internet WWW-server to the Internet.

The security means may embody conventional WWW-technology, the use of such technology making the security function transparent.

The system may include means for saving said electronic signature for subsequent use.

The present invention further provides a secure computer terminal for an Internet-client, said terminal being adapted for connection to the Internet and having a WWW-browser and a data modem for respectively accessing, and interfacing with, WWW-servers on the Internet, characterised in that said computer terminal includes security means for ensuring that transactions conducted with a WWW-server are secure. said security means including an Internet-client server and means for endorsing each transaction with an electronic signature, and in that said Internet-client server has WWW-functionalities and is adapted to link with said data modem and said transaction endorsement means.

The security means may be adapted to encrypt and decrypt said transactions and the transaction endorsement means may include a personalised smart card for a user of said terminal. With this arrangement, the terminal will include a smart card reader connected to a communication port of the computer terminal. The encryption and decryption may be effected by the smart card.

The security means may embody conventional WWW-technology, the use of such technology making the security function transparent.

The present invention further provides a secure Internet WWW-server, said server being adapted to communicate with a secure computer terminal as outlined in preceding paragraphs, characterised in that said Internet WWW-server includes server security means to ensure that transactions conducted with said computer terminal are secure, and in that said server security means are arranged behind said Internet WWW-server and adapted to verify said electronic signature The server security means which may be adapted to encrypt and decrypt information and which may be arranged behind said WWW-servers as cgi-script and WWW-compatible software, may embody conventional WWW-technotogy. The use of conventional WWW-technology makes the server security function transparent

The present invention further provides. In an Internet communication system including a computer terminal, for each Internet-client, and a number of Internet WWW-servers adapted to be accessed by an Internet-client, said computer terminals being adapted for connection to the Internet and having a WWW-browser and a data modem for respectively accessing, and interfacing with, the WWW-servers, a method for the secure transmission of information data between said Internet WWW-server and said computer terminals, characterised by the steps of:
- storing said information data on an intermediate Internet-client server, local to said computer terminal and having WWW-functionalities;
- endorsing said information data with an electronic signature:

- transmitting the endorsed information data to said Internet WWW-server; and
- on receipt of said endorsed information data by said Internet WWW-server. verifying the electronic signature.

The method may include the steps of
- encrypting said endorsed information data prior to transmission to said Internet WWW-server; and
- on receipt of said encrypted information data by said Internet WWW-server, decrypting the information date.

The method may also include the steps of:
- encrypting information data prior to transmission from an Internet WWW-server to a computer terminal; and
- on receipt of encrypted information data by said computer terminal, decrypting the information data.

The method may include the step of storing said electronic signature for subsequent identification of the originator of a transaction.

The method step of endorsing said information data with an electronic signature may be effected using a personalised smart card and the personalised smart card may be used to encrypt and decrypt information data.

The information data may be in page-form, the language of said page-form data may be HTML and the page may comprise either separately, or in any combination, text, graphics, pictures, photographs, and fields for entry of information.

Furthermore, the page may be linked to other pages on the same, or other, Internet WWW-servers.

When the page is a form having fields for entry of information, the method may include the steps of obtained said form from an Internet WWW-server: completing said form by entering information in said fields; transferring said completed form to said local intermediate server; endorsing said completed form with an electronic signature; transmitting the endorsed form.from said local intermediate server to said Internet WWW-server; and, on receipt of said endorsed form by said Internet WWW-server, verifying the electronic signature. The endorsed form may be encrypted prior to transmission to said Internet WWW-server

The form may be obtained from an Internet WWW-server. www.xxx.se, and may, for example, contains the following text:
<form method = "post" action = "http //localhost/cgi-win/a_script">
<input type = "hidden" name = "data" value = "<data to be signed>">
<input type = "hidden" name = "url" value ="http://www xxx se/cgi bin/any_script">
<input type = "submit" value = "Sign"> </form>
and method may, in these circumstances, includes the steps of producing an electronic signature on said form, an "a_script" on said local intermediate server being used to effect the signing function; and returning said form to said Internet WWW-server, said form containing, inter aha:
<form method = "post" action = "http:/www.xxx se/cgi-bin/any_script"> <input type = "hidden" name = "data" value = "<data which has been signed>">
<input type = "hidden" name = "signinfo" value =" <the electronic signature of the data>">
<input type = "submit" value = "Transmit"> </form>

The present invention further provides a communication system operating in accordance with a method, as claimed outlined in preceding paragraphs, for the secure transmission of information data between an Internet WWW-server and an Internet-client.

The present invention further provides an Internet communication system including a secure computer terminal. as outlined in preceding paragraphs. for each Internet-client. and a plurality of Internet WWW-servers, as outlined in preceding paragraphs.

The foregoing and other features according to the present invention will be better understood from the following description, with reference to the accompanying drawings, in which:
Figure 1 diagrammatically illustrates part of an Internet communication system, according to the present invention, including a secure computer terminal for use by Internet-clients.
Figure 2 diagrammatically illustrates another part of an Internet communication system, according to the present invention, including a secure Internet WWW-server for use by Internet-clients.

It will be seen from the following description that an Internet communication system, according to the present invention, provides a more secure arrangement for transactions between an Internet WWW-server and an Internet-client, i.e. the system will facilitate the transmission of information data throughout the essentially public network of the Internet, without the information data being manipulated.

Known Internet communication networks include, in essence, a computer terminal, for each Internet-client, and a number of Internet WWW-servers adapted to be accessed by an Internet-client. The computer terminals are adapted for connection tc the Internet, i.e. have the necessary software and authority for access to the Internet WWW-servers, and having a WWW-browser and a data modem for respectively accessing, and interfacing with, the WWW-servers.

In accordance with the present invention, such a system also includes security means, for the computer terminals and Internet-servers, which are adapted to ensure that transactions between a WWW-server and an Internet-client are secure.

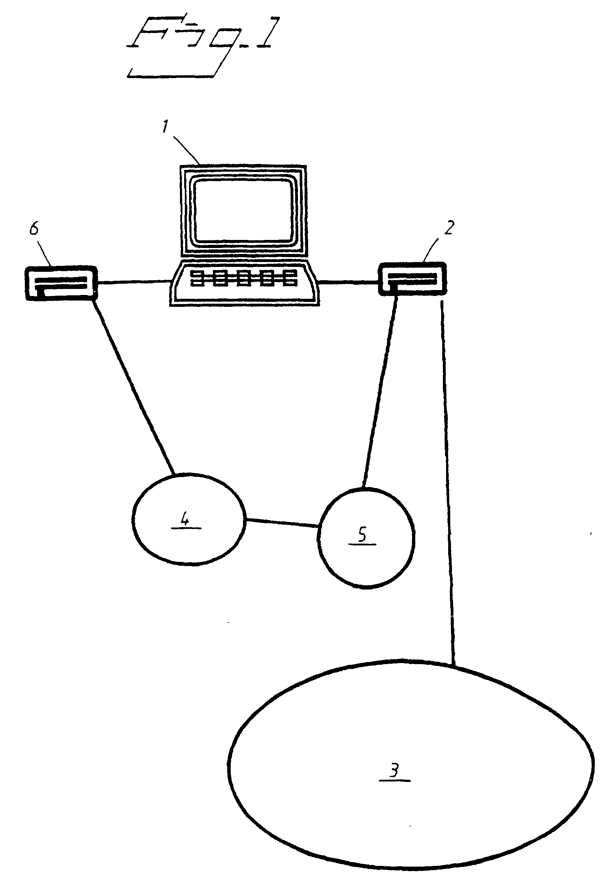

As can be seen from Figure 1 of the accompanying drawings, a secure computer terminal, according to the present invention, includes a computer terminal 1, for example, a personal computer, having a modem 2 for connecting the computer terminal 1 to a public telephone line and thence to the Internet 3, a security module 4. including an Internet-client server 5. for the computer terminal 1, a unit 6, for example, a smart card reader, to provide the means for endorsing each transaction with an electronic signature.

The Internet-client server 5 has WWW-functronalities and is adapted to link with the data modem 2 and the unit 6.

The data modem 2 may, in practice, be integral with, or external to, the computer terminal 1, and is adapted to send and receive information data for a range of applications, including facsimile and e-mail. In any event, the data modem 2 is connected to a communications port of the computer terminal 1.

The required software for the facsimile and e-mail functions is stored on the computer terminal 1 and includes a conventional WWW-browser for obtaining access to the Internet.

Since the Internet is a public network, there is clearly a requirement to be able to effect transactions via the Internet in a secure manner, i.e. the transmission and receipt of confidential information data via the modem 2. In accordance with the present invention, this is preferably achieved by the use of a personal smart card which holds the personal and security data of the card-holder and allows him, or her, to be identified Thus, the use of a smart card, in association with a smart card reader 6, will enable each transaction to be signed, electronically, and, where necessary, encrypted in a manner whereby the transaction can be forwarded through different networks without risk of manipulation by third parties. In order to be able to identify, at a later date, the identity of the person who initiated the transaction, the electronic signature may be saved and recovered as, and when, required.

The security function of the present invention can, therefore, be effected through use of a conventional WWW-browser, together with functions for, inter alia, encryption and the handling of smart cards.

The smart card may use asymmetric coding, including public cypher encryption, for effecting the electronic signature and, where necessary, encoding and decoding.

Thus, in accordance with the present invention, secure transactions can be effected on the Internet using the security module 4 and associated WWW-server 5. The module 4 and WWW-server 5 are, therefore, installed on the computer terminal 1 for performing the security functions referred to above. The WWW-server, forming part of the security module 4, is an extremely small WWW-server, of conventional type. which has the functionality to sign, encrypt and decrypt information data. Communication with the smart card reader 6 is handled by the security functions of the module 4 and, to facilitate this, the smart card reader 4 is connected to a communications port of the computer terminal 1.

The security module 4 uses conventional WWW-technology and, as a consequence of this, the security-application becomes transparent (i.e. because WWW-technology is used for both the security module and the remainder of the system) and can be generalised to match many different services.

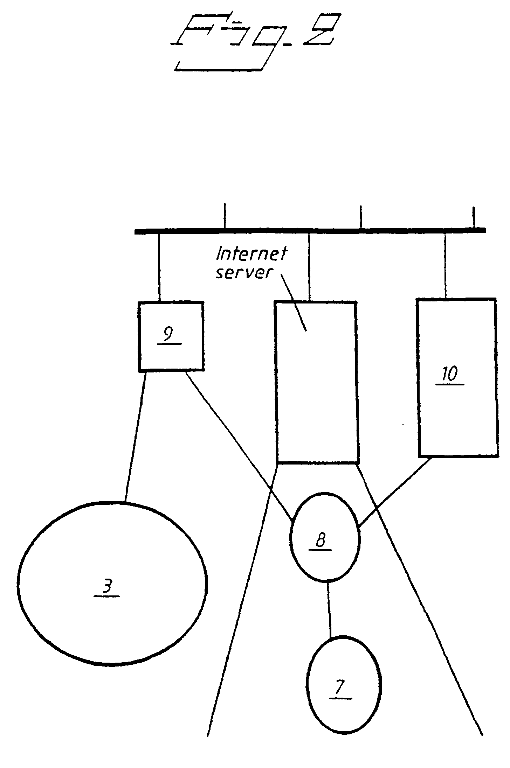

It will be seen from Figure 2 of the accompanying drawings that, on the server side of the present invention. a security module 7 is arranged behind a WWW-server 8. and uses cgi-script and conventional software programs. as is normally the case in connection with the WWW. This security module is responsible for:
- verification of electronic signatures;
- encryption of information; and
- decryption of information.

As shown in Figure 2, the WWW-server 8 is connected to the Internet 3, via a router 9, and can, for example, in the case of a bank, be connected to a back-end system 10 to which accepted transactions would be transmitted and stored.

In essence, the WWW will function, under normal circumstances, in the following manner:
- a WWW-client, for example, Netscape, contacts (as a result of an action, for instance a click with an electronic mouse, by a user of the computer terminal 1) a WWW-server, somewhere in the world, and requests the return of a certain 'page', stored on the WWW-server; the requested 'page' may consist of text, graphics, pictures, photographs, and fields for entry of information, etc., but also of links to 'pages' on the same and/or other Web site servers - there may, in fact. be many 'pages' that bring together links to all Web-site relating to a particular topic; and
- when the 'page' consists of a number of fields for entry of information, i.e. the page is a form requiring completion by a recipient, the request, referred to in (a) above, from the client consists of the completed form; this form is treated on the server-side and, as a result, a new page is returned.

In accordance with the present invention, use is made of conventional WWW-mechanisms, for example, a form is obtained from an external server but. instead of transmitting the completed form directly back to the external server, the form makes an 'intermediate landing' on the WWW-server of the local computer terminal 1, i.e the server 5. The server 5 attends to the signing, and possibly also encryption, of the information, In a manner as outlined above, and, on completion of this process, the form, or 'page', is returned to the WWW-client The form will not be transmitted to the external server until the user requests such transmission.

As stated above, data which is to be made available on the Internet must be transferred and, if necessary, translated into HTML documents, i.e. the universal language of the Internet.

The method used for writing on a HTML-page is outlined below, In relation to the:
- recovery of information data from a 'page', or more particularly, from a WWW-form; and
- application of an electronic signature to the information data to facilitate the secure transmission of the information data through the various public networks.

In accordance with the present invention. a small local WWW-server 5 is installed on the computer terminal 1 and the conventional WWW-procedures for handling forms are then used, in a manner known to persons skilled in the art, to effect the process. In other words, in accordance with normal procedures for forms, a cgi-script is called on the local server with data to which an electronic signature is to be applied, i.e. from the server www.xxx.se comes (as a result of a previous form) a 'page' which contains, for example:
<form method = "post" action = "http://localhost/cgi-win/a_script">
<input type = "hidden" name = "data" value = "<data to be signed>">
<input type = "hidden" name = "url" value ="http.//www xxx.se/cgi bin/any_script">
<input type = "submit" varue = "Sign"> </form>.
"a_script" on the local server (local host) making use of the signing function to produce an electronic signature to the data and then returns a page which, among other things, contains:
<form method = "post" action = "http:/www xxx se/cgi-bin/any_script"> <input type = "hidden" name = "data" value = "<data which has been signed>">
<input type = "hidden" name = "signinfo" value =" <the electronic signature of the data>">
<input type = "submit" value = "Transmit"> </form>

Since the security function of the present invention is based on conventional WWW-technology, it is independent of which browser is used and which server is used, i.e. no interference is necessary either in a browser, or in a server, in respect of which the security function is used In addition. the security function of the present Invention is relatively easy to adapt to different levels of security and to new technologies. This makes the present invention very flexible and cost effective in that it can be readily adapted to meet specific security requirements which may be demanded by a user and/or service provider.

It will be directly evident from the foregoing that the present invention can be used in many applications, where security of information is of prime importance, for example, to:
- perform business transactions, such as, bank transactions, or the purchase of goods;
- indicate authority for performing actions, such as, logging on to a system, or obtaining access to certain information;
- encrypt information which shall be transmitted over the WWW; and
- decrypt information which has been published encrypted on the WWW.

In addition, the use of the security function of the present invention gives rise to the following advantages:
- use of conventional VVWW-technoiogies; this means that services which are developed on this medium are placed on the server-side and become accessible to everybody without any distribution problems - all logic in the service itself is on the server-side;
- no dependence on which browser, or server, is used,
- no interference necessary with either the browser, or the server;
- relatively inexpensive, and
- flexible, in that it can be adapted to meet different levels of security, the use of a smart card representing the highest level of security.

The solution to the Internet security problems, presented by the present invention. can be effected using all Windows-platforms, (3.x, Win95, NT). However, the invention could be adapted for use on other platforms, such as, UNIX, or the Macintosh-platform, by suitably adjusting the porting arrangements.

## Claims

1. A computer terminal (1) for an Internet communication system including at least one such a computer terminal, for an Internet-client, and a number of Internet WWW-servers (8) adapted to be accessed by such Internet-clients, said computer terminal (1) being adapted for connection to the Internet (3) and having a WWW-browser and a data modem (2) for respectively accessing, and interfacing with, the WWW-servers (8), wherein the computer terminal (1) includes security means (4) to ensure that transactions between a WWW-server (8) and an Internet-client are secure, **characterised in that** said security means (4) include an Internet-client server (5) and means (6) for endorsing each transaction with an electronic signature, and **in that** said Internet-client server (5) has WWW-functionalities and is adapted to link with said data modem (2) and said transaction endorsement means (6).

2. A computer terminal (1) as claimed in claim 1, **characterised in that** said security means (4) are adapted to encrypt and decrypt said transactions.

3. A computer terminal (1) as claimed in claim 1, or claim 2, **characterised in that** said transaction endorsement means (6) includes a personalised smart card for each Internet client, and **in that** said computer terminal includes a smart card reader (6) connected to a communication port thereof.

4. A computer terminal (1) as claimed in claim 3, when appended to claim 2, **characterised in that** said encryption and decryption is effected by said smart cards.

5. A computer terminal (1) as claimed in any one of the preceding claims, **characterised in that** said security means embody conventional WWW-technology.

6. A computer terminal (1) claimed in claim 5, **characterised in that** use of conventional WWW-technology makes the security function transparent.

7. A computer terminal (1) as claimed in any one of the preceding claims, **characterised in that** said system includes means for saving said electronic signature for subsequent use.

8. A method for the secure transmission of information data between an Internet WWW-server (8) and computer terminals (1), in an Internet communication system including at least one computer terminal (1), for each Internet-client, and a number of Internet WWW-servers (8) adapted to be accessed by such Internet-clients, said computer terminals (1) being adapted for connection to the Internet (3) and having a WWW-browser and a data modem (2) for respectively accessing, and interfacing with, the WWW-servers (8), **characterised by** the steps of:
- storing said information data on an intermediate Internet-client server (5), local to said computer terminal (1) and having WWW-functionalities;
- endorsing said information data with an electronic signature;
- transmitting the endorsed information data to said Internet WWW-server (8); and
- on receipt of said endorsed information data by said Internet WWW-server (8), verifying the electronic signature.

9. A method as claimed in claim 8, **characterised by** the steps of:
- encrypting said endorsed information data prior to transmission to said Internet WWW-server (8); and
- on receipt of said encrypted information data by said Internet WWW-server (8), decrypting the information date.

10. A method as claimed in claim 8 or claim 9, **characterised by** the steps of:
- encrypting information data prior to transmission from an Internet WWW-server (8) to a computer terminal (1); and
- on receipt of encrypted information data by said computer terminal (1), decrypting the information data.

11. A method as claimed in any one of the claims 8 to 10, **characterised by** the step of storing said electronic signature for subsequent identification of the originator of a transaction.

12. A method as claimed in any one of claims 8 to 11, **characterised in that** the step of endorsing said information data with an electronic signature is effected using a personalised smart card.

13. A method as claimed in claim 12, **characterised in that** said personalised smart card is used to encrypt and decrypt information data.

14. A method as claimed in any one of the claims 8 to 13, **characterised in that** said information data is in page-form, the language of said page-form data being HTML.

15. A method as claimed in claim 14, **characterised in that** said page consist of any one, or more, of the following:
- text;
- graphics;
- pictures;
- photographs; and
- fields for entry of information

16. A method as claimed in claim 14, **characterised in that** said page is linked to other pages on the same, or other, Internet WWW-servers.

17. A method as claimed in claim 15, **characterised in that** said page is a form having fields for entry of information, and **in that** the method includes the steps of:
- obtaining said form from an Internet WWW-server (8);
- completing said form by entering information in said fields;
- transferring said completed form to said local intermediate server (5);
- endorsing said completed form with an electronic signature;
- transmitting the endorsed form from said local intermediate server (5) to said Internet WWW-server (8); and
- on receipt of said endorsed form by said Internet WWW-server (8), verifying the electronic signature.

18. A method as claimed in claim 17, **characterised in that** said endorsed form is encrypted prior to transmission to said Internet WWW-server (8).

19. A method as claimed in claim 17, or claim 18, **characterised in that** said form is obtained from an Internet WWW-server (8), www.xxx.se, and contains the following text:
<form method = "post" action = http://localhost/cgi-win/a script>
<input type = "hidden" name = "data" value = "data to be signed>">
<input type = "hidden" name = "url" value = http://www.xxx.se/sgi bin/any script>
<input type = "submit" value = "Sign"></form>
and **in that** said method includes the steps of:
- producing an electronic signature on said form, an "a_script" on said local intermediate server 85) being used to effect the signing function; and returning said form to said Internet WWW-server (8), said form containing, inter alia:
<form method = "post" action = "http:/www.xxx.se/cgi-bin/any_script"><input type = "hidden" name = "data" value = "<data which has been signed>">
<input type = "hidden" name = "signinfo" value = "<the electronic signature of the data>">
<input type = "submit" value = "Transmit"></form>

## Patentansprüche

1. Computer-Terminal (1) für ein Internet-Kommunikationssystem mit wenigstens einem derartigen Computer-Terminal für einen Internet-Kunden, und einer Anzahl von Internet - WWW-Servern (8), die so ausgebildet sind, dass auf diese durch derartige Internet-Kunden zugegriffen werden kann, wobei der Computer-Terminal (1) für die Verbindung mit dem Internet (3) ausgebildet ist und einen WWW-Browser und ein Datenmodem (2) hat, um jeweils auf die WWW-Server (8) zuzugreifen und sie anzuschließen, wobei der Computer-Terminal (1) Sicherheitsmittel (4) enthält, um sicherzustellen, dass die Transaktionen zwischen einem WWW-Server (8) und einem Internet-Kunden sicher sind, **dadurch gekennzeichnet, dass** die Sicherheitsmittel (4) einen Internet-Kundenserver (5) und Mittel (6) zum Bestätigen jeder Transaktion mit einer elektronischen Signatur aufweisen, und dass der Internet-Kundenserver (5) WWW-Funktionalitäten hat und so ausgebildet ist, dass er mit dem Daten-Modem (2) und den Transaktions-Bestätigungsmitteln (6) verbunden werden kann.

2. Computer-Terminal (1) nach Anspruch 1, **dadurch gekennzeichnet, dass** die Sicherheitsmittel (4) so ausgebildet sind, dass sie die Transaktionen verschlüsseln und entschlüsseln.

3. Computer-Terminal (1) nach Anspruch 1 oder 2, **dadurch gekennzeichnet, dass** die Transaktions-Bestätigungsmittel (6) für jeden Internet-Kunden eine personenbezogene Chipkarte aufweisen, und dass der Computer-Terminal einen Chipkartenleser (6) enthält, der mit einem Kommunikations-Port derselben verbunden ist.

4. Computer-Terminal ( 1 ) nach Anspruch 3, wenn bezogen auf Anspruch 2, **dadurch gekennzeichnet, dass** die Verschlüsselung und Entschlüsselung durch die Chipkarten durchgeführt wird.

5. Computer-Terminal ( 1 ) nach einem der vorstehenden Patentansprüche, **dadurch gekennzeichnet, dass** die Sicherheitsmittel eine herkömmliche WWW-Technologie verkörpern.

6. Computer-Terminal (1) nach Anspruch 5, **dadurch gekennzeichnet, dass** die Benutzung der herkömmlichen WWW-Technologie die Sicherheitsfunktion transparent macht.

7. Computer-Terminal (1) nach einem der vorstehenden Ansprüche, **dadurch gekennzeichnet, dass** das System Mittel zum Speichern der elektronischen Signatur für die darauf folgende Benutzung aufweist.

8. Verfahren zur sicheren Übertragung von Informationsdaten zwischen einem Intemet-WWW-Server (8) und Computer-Terminals (1) in einem Internet-Kommunikationssystem mit wenigstens einem Computer-Terminal (1) für jeden Internet-Kunden, und einer Anzahl von Internet-WWW-Servern (8), die so ausgebildet sind, dass auf diese durch derartige Internet-Kunden zugegriffen werden kann, wobei die Computer-Terminals (1) für die Verbindung mit dem Internet (3) ausgebildet sind und einen WWW-Browser und ein Daten-Modem (2) jeweils zum Zugreifen und Verbinden mit den WWW-Servern (8) aufweisen, **gekennzeichnet durch** die Schritte:
- Speichern der Informationsdaten auf einem Internet-Kunden-Zwischenserver (5), der am Computer-Terminal (1) lokalisiert ist und WWW-Funktionalitäten hat;
- Bestätigen der Informationsdaten mit einer elektronischen Signatur;
- Übertragen der bestätigten Informationsdaten auf den Internet-WWW-Server (8); und
- bei Empfang der bestätigten Informationsdaten **durch** den Internet-WWW-Server (8), Verifizieren der elektronischen Signatur.

9. Verfahren nach Anspruch 8, **gekennzeichnet durch** die Schritte:
- Verschlüsseln der bestätigten Informationsdaten vor der Übertragung auf den Intemet-WWW-Server (8); und
- bei Empfang der verschlüsselten Informationsdaten **durch** den Intemet-WWW-Server (8), Entschlüsseln der Informationsdaten.

10. Verfahren nach Anspruch 8 oder 9, **gekennzeichnet durch** die Schritte:
- Verschlüsseln der Informationsdaten vor dem Übertragen von einem Internet-WWW-Server (8) auf einen Computer-Terminal (1); und
- bei Empfang von verschlüsselten Informationsdaten **durch** den Computer-Terminal ( 1 ), Entschlüsseln der Informationsdaten.

11. Verfahren nach einem der Ansprüche 8 bis 10, **gekennzeichnet durch** den Schritt Speichern der elektronischen Signatur für die darauf folgende Identifikation des Urhebers einer Transaktion.

12. Verfahren nach einem der Ansprüche 8 bis 11, **dadurch gekennzeichnet, dass** der Schritt Bestätigen der Informationsdaten mit einer elektronischen Signatur unter Verwendung einer personenbezogenen Chipkarte durchgeführt wird.

13. Verfahren nach Anspruch 12, **dadurch gekennzeichnet, dass** die personenbezogene Chipkarte dazu verwendet wird, die Informationsdaten zu verschlüsseln und zu entschlüsseln.

14. Verfahren nach einem der Ansprüche 8 bis 13, **dadurch gekennzeichnet, dass** die Informationsdaten eine Seitenform haben, wobei die Sprache der Seitenform HTML ist.

15. Verfahren nach Anspruch 14, **dadurch gekennzeichnet, dass** die Seite aus einem oder mehreren der folgenden Posten besteht:
- Text;
- Grafiken;
- Bilder;
- Fotografien; und
- Felder zur Eingabe von Information

16. Verfahren nach Anspruch 14, **dadurch gekennzeichnet, dass** die Seite mit anderen Seiten auf dem gleichen oder anderen Internet-WWW-Servern verbunden ist.

17. Verfahren nach Anspruch 15, **dadurch gekennzeichnet, dass** die Seite ein Formular mit Feldern zum Eintragen von Information ist und dass das Verfahren die Schritte aufweist:
- Erhalten des Formulars von einem Internet WWW-Server (8);
- Ausfüllen des Formulars durch Eintragen von Information in diese Felder;
- Übertragen des ausgefüllten Formulars an den lokalen Zwischenserver (5);
- Bestätigen des ausgefüllten Formulars mit einer elektronischen Signatur;
- Übertragen des bestätigten Formulars vom lokalen Zwischenserver (5) auf den Intemet-WWW-Server (8); und
- bei Empfang des bestätigten Formulars durch den Internet-WWW-Server (8) Verifizieren der elektronischen Signatur.

18. Verfahren nach Anspruch 17, **dadurch gekennzeichnet, dass** das bestätigte Formular vor dem Übertragen auf den Internet-WWW-Server (8) verschlüsselt wird.

19. Verfahren nach Anspruch 17 oder 18, **dadurch gekennzeichnet, dass** das Formular von einem Intemet-WWW-Server (8), www.xxx.se erhalten ist, und den folgenden Text enthält:
<form method = "post" action = http://localhost/cgi-win/a script>
<input type = "hidden" name = "data" value = "data to be signed>">
<input type = "hidden" name = "url" value = http://www.xxx.se/sgi bin/any script>
<input type = "submit" value = "Sign"></form>
und dass das Verfahren die Schritte aufweist:
- Erzeugen einer elektronischen Signatur auf dem Formular, wobei ein "a_script" auf dem lokalen Zwischenserver (85) dazu verwendet wird, die Unterzeichnungsfunktion zu bewirken; und
- Rückleiten des Formulars an den Intemet-WWW-Server (8), wobei das Formular unter anderem enthält:
<form method = "post" action = "http:/www.xxx.se/cgi-bin/any_script"><input type = "hidden" name = "data" value = "<data which has been signed>">
<input type = "hidden" name = "signinfo" value = "<the electronic signature of the data>">
<input type = "submit" value = "Transmit"></form>.

## Revendications

1. Ordinateur terminal (1) pour un système de communication Internet comprenant au moins un tel ordinateur terminal, pour un client Internet, et un nombre de serveurs Internet WWW (8) adaptés pour être accédés par de tels clients Internet, ledit ordinateur terminal (1) étant adapté pour une connexion à Internet (3) et ayant un navigateur WWW et un modem de données (2) pour, respectivement, accéder aux, et interfacer avec les, serveurs WWW (8), dans lequel l'ordinateur terminal (1) comprend des moyens de sécurité (4) pour garantir que les transactions entre un serveur WWW (8) et un client Internet sont sécurisées, **caractérisé en ce que** lesdits moyens de sécurité (4) comprennent un serveur client Internet (5) et des moyens (6) pour endosser à chaque transaction une signature électronique, et **en ce que** ledit serveur client Internet (5) a des fonctionnalités WWW et qu'il est adapté pour une liaison avec ledit modem de données (2) et lesdits moyens d'endossement de transaction (6).

2. Ordinateur terminal (1) selon la revendication 1, **caractérisé en ce que** lesdits moyens de sécurité (4) sont adaptés pour chiffrer et déchiffrer lesdites transactions.

3. Ordinateur terminal (1) selon la revendication 1, ou la revendication 2, **caractérisé en ce que** lesdits moyens d'endossement de transaction (6) comprennent une carte à puce personnalisée pour chaque client Internet, et **en ce que** ledit ordinateur terminal comprend un lecteur de carte à puce (6) connecté à un port de communication de celui-ci.

4. Ordinateur terminal (1) selon la revendication 2, lorsqu'elle est annexée à la revendication 2, **caractérisé en ce que** ledit chiffrement et déchiffrement est effectué par lesdites cartes à puce.

5. Ordinateur terminal (1) selon l'une quelconque des revendications précédentes, **caractérisé en ce que** lesdits moyens de sécurité représente une technologie WWW conventionnelle.

6. Ordinateur terminal (1) selon la revendication 5, **caractérisé en ce que** l'utilisation d'une technologie WWW conventionnelle rend la fonction de sécurité transparente.

7. Ordinateur terminal (1) selon l'une quelconque des revendications précédentes, **caractérisé en ce que** ledit système comprend des moyens pour enregistrer ladite signature électronique pour une utilisation ultérieure.

8. Procédé pour la transmission sécurisée de données d'information entre un serveur WWW Internet (8) et un ordinateur terminal (1), dans un système de communication Internet comprenant au moins un ordinateur terminal (1), pour chaque client Internet, et un nombre de serveurs WWW Internet (8) adaptés pour être accédés par de tels clients Internet, lesdits ordinateurs terminaux (1) étant adaptés pour une connexion à Internet (3) et ayant un navigateur WWW et un modem de données (2) pour, respectivement, accéder aux, et interfacer avec les, serveurs WWW (8), **caractérisé par** les étapes consistant à :
stocker lesdites données d'information sur un serveur client Internet intermédiaire (5), local à l'ordinateur terminal (1) et ayant des fonctionnalités WWW ;
endosser lesdites données d'information avec une signature électronique ;
transmettre les données d'information endossées audit serveur WWW Internet (8) ; et
à la réception desdites données d'information endossées par ledit serveur WWW Internet (8), vérifier la signature électronique.

9. Procédé selon la revendication 8, **caractérisé par** les étapes consistant à :
chiffrer lesdites données d'information endossées avant la transmission audit serveur WWW Internet (8) ; et
à la réception desdites données d'informations chiffrées par ledit serveur WWW Internet (8), déchiffrer les données d'information.

10. Procédé selon la revendication 8 ou la revendication 9, **caractérisé par** les étapes consistant à :
chiffrer les données d'information avant la transmission d'un serveur WWW Internet (8) vers un ordinateur terminal (1) ; et
à la réception des données d'information chiffrées par ledit ordinateur terminal (1), déchiffrer les données d'information.

11. Procédé selon l'une quelconque des revendications 8 à 10, **caractérisé par** l'étape de stockage de ladite signature électronique pour une identification ultérieure de la source d'une transaction.

12. Procédé selon l'une quelconque des revendications 8 à 11, **caractérisé en ce que** l'étape d'endossement desdites données d'information avec une signature électronique est effectuée à l'aide d'une carte à puce personnalisée.

13. Procédé selon la revendication 12, **caractérisé en ce que** ladite carte à puce personnalisée est utilisée pour chiffrer et déchiffrer des données d'information.

14. Procédé selon l'une quelconque des revendications 8 à 13, **caractérisé en ce que** lesdites données d'information sont sous la forme d'une page, le langage ladite desdites données sous forme de page étant le langage HTML.

15. Procédé selon la revendication 14, **caractérisé en ce que** ladite page comprend un quelconque, ou plusieurs, des éléments suivants :
texte ;
graphiques ;
images ;
photographies ; et
champs de saisie d'informations.

16. Procédé selon la revendication 14, **caractérisé en ce que** ladite page est liée à d'autres pages sur le même, ou d'autres, serveurs WWW Internet.

17. Procédé selon la revendication 15, **caractérisé en ce que** ladite page est un formulaire ayant des champs de saisie d'informations, et **en ce que** le procédé comprend les étapes consistant à :
obtenir ledit formulaire d'un serveur WWW Internet (8) ;
renseigner ledit formulaire en saisissant des informations dans lesdits champs ;
transférer ledit formulaire renseigné audit serveur intermédiaire local (5) ;
endosser ledit formulaire renseigné avec une signature électronique ;
transmettre ledit formulaire endossé d'un dit serveur intermédiaire local (5) audit serveur WWW Internet (8) ; et
à la réception dudit formulaire endossé par ledit serveur WWW Internet (8), vérifier la signature électronique.

18. Procédé selon la revendication 17, **caractérisé en ce que** ledit formulaire endossé est chiffré avant la transmission audit serveur WWW Internet (8).

19. Procédé selon la revendication 17, ou la revendication 18, **caractérisé en ce que** ledit formulaire est obtenu à partir d'un serveur WWW Internet (8), www.xxx.se, et qu'il contient le texte suivant :
<form method = "envoyer" action = http://hôtelocal/cgi-win/un script>
<input type = "caché" name = "données" value = "<données à signer>">
<input type = "caché" name = "url" value = http://www.xxx.se/sgi bin/tout script>
<input type = "soumettre" value = "Signer"></form>
et **en ce que** ledit procédé comprend les étapes consistant à:
produire une signature électronique sur ledit formulaire, un « un_script » sur ledit serveur intermédiaire local (5) utilisé pour réaliser la fonction de signature ; et
renvoyer ledit formulaire audit serveur WWW Internet (8), ledit formulaire contenant, entre autres :
<form method = "envoyer" action = http://www.xxx.se/cgi-win/tout script><input type = "caché" name = "données" value = "<données qui ont été signées >">
<input type = "caché" name = "infos_sign" value = "<la signature électronique des données>">
<input type = "soumettre" value = "Transmettre"></form>
